(19) Europäisches Patentamt

European Patent Office

Office européen des brevets

(11) Numéro de publication: **0 176 496**
**B1**

(12) **FASCICULE DE BREVET EUROPEEN**

(45) Date de publication du fascicule du brevet:
**09.12.87**

(21) Numéro de dépôt: **85870128.7**

(22) Date de dépôt: **20.09.85**

(51) Int. Cl.⁴: **B 65 G 47/91,** B 65 G 49/06,
B 65 H 3/08, B 66 C 1/02,
B 25 B 11/00

(54) **Dispositif de manutention de vitres.**

(30) Priorité: **25.09.84 BE 213716**

(43) Date de publication de la demande:
**02.04.86 Bulletin 86/14**

(45) Mention de la délivrance du brevet:
**09.12.87 Bulletin 87/50**

(84) Etats contractants désignés:
**BE DE IT SE**

(56) Documents cités:
**FR - A - 516 828**
**FR - A - 1 240 453**
**FR - A - 1 516 007**
**FR - A - 1 533 710**

(73) Titulaire: **DIAMANT BOART Société Anonyme, Avenue du Pont de Luttre, 74, B-1190 Bruxelles (BE)**

(72) Inventeur: **Lambot, Honoré Joseph, 16, rue Van Volxem, B-1430 Wauthier-Braine (BE)**

(74) Mandataire: **De Brabanter, Maurice et al, Bureau VANDER HAEGHEN 63 Avenue de la Toison d'Or, B-1060 Bruxelles (BE)**

ACTORUM AG

## Description

La présente invention est relative à un dispositif d'amenée, de positionnement, de maintien, de transfert et/ou d'enlèvement automatique d'objets plats, constitué d'un boîtier mû par un éqipage mobile de manutention et comprenant une bride fixe et une assiette mobile pourvue d'une ventouse de préhension, et délimitant une enceinte dans laquelle est disposé un vérin souple relié directement à une source d'alimentation de gaz et à une source de pression réduite, destiné à repousser ou à ramener une ventouse de préhension formée par des joints annulaires d'étanchéité.

Elle trouve sa principale application dans la manutention d'objets plats, en particulier dans les machines destinées au façonnage des vitres, dont le chargement exige des moyens d'amenée de faible encombrement capables toutefois d'assurer un positionnement précis et une cadence de travail très rapide.

On connaît par le document FR-A-2 411 670, une machine polaire pour le façonnement automatique des arêtes d'une vitre dans laquelle la meule n'est pas guidée par un gabarit, mais par la vitre elle-même.

Dans ces machines, il est souhaitable de faire plonger les dispositifs d'amenée et de maintien au coeur du poste de travail dans la machine et d'effectuer simultanément le façonnage et l'approche des moyens d'amenée et/ou d'évacuation des vitres.

Les dispositifs d'amenée sont généralement constitués d'un bras pivotant ou d'un chariot sur lequel sont montés de petits vérins verticaux munis de ventouses. Ces vérins sont destinés à appliquer les ventouses sur la vitre et à soulever ensuite ladite vitre ou tout autre objet plat tel un panneau ou une tôle.

L'encombrement des dispositifs d'amenée connus interdit le positionnement coaxial de la ventouse de préhension à l'axe de rotation du plateau tournant. Cet encombrement empêche ainsi, que ne soient effectués simultanément l'enlèvement d'une première vitre et l'amenée d'une seconde vitre dans la machine.

En outre, il se crée petit à petit, du fait de l'usure, des butées de centrage et des pièces de frottement desdits dispositifs d'amenée, des décalages et des jeux qui limitent la précision du positionnement des vitres dans la machine de façonnage.

On connaît également par le document FR-A-1 516 007, un dispositif de transport et de retournement simultané d'objets moulés fragiles qui permet d'amener lesdits objets par voie mécanique, d'un séchoir à une bande de nettoyage tout en les retournant. Le dispositif est constitué d'un boîtier, mû par un bras de manutention. Il comprend une bride fine et une boîte dans laquelle un soufflet pourvu d'une ventouse de préhension est relié à une source de pression réduite et à une entrée d'air. Ce dispositif sert avant tout à assurer une manutention automatique pour laquelle une précision de l'ordre du millimètre est jugée satisfaisante. Il n'assure cependant pas le positionnement de pièces selon des références micrométriques avec la reproductibilité et la précision requises par certains procédés de flettage qui exigent un indexage avec une tolérance inférieure au dixième de millimètre.

La présente invention vise à remédier aux inconvénients des dispositifs d'amenée connus et propose un dispositif de faible encombrement qui permet d'obtenir un positionnement plus précis et une cadence plus rapide.

Par rapport à l'état de la technique refleté par le document FR-A-1 516 007, qui décrit un dispositif d'amenée, de positionnement, de maintien, de transfert et/ou d'enlèvement automatique d'objets plats, constitué d'un boîtier mû par un équipage mobile de manutention et comprenant une bride fixe et une assiette mobile pourvue d'une ventouse de préhension et délimitant une enceinte dans laquelle est disposé un vérin souple relié directement à une source d'alimentation de gaz et à une source de pression réduite; à repousser ou à ramener une ventouse de préhension formée par un joint annulaire d'étanchéité, l'invention est caractérisée en ce que le vérin souple susdit est constitué d'une enveloppe en caoutchouc ou en matière élastique ayant deux faces d'extrémité constituées par des membranes qui, en se rétractant sous l'action d'une pression réduite appliquent fermement l'assiette mobile contre la bride fixe du boîtier, en formant un ensemble totalement rigide.

Dans une première forme de réalisation particulière, le dispositif de chargement-déchargement comprend deux vérins souples fixés de part et d'autre, à une bride fixe par une première face d'extrémité et à une assiette mobile par une seconde face d'extrémité au moyen de broches d'accouplement creuses reliées à chacun des conduits de la source d'air comprimé et de la source de pression réduite.

D'autres particularités et détails de l'invention apparaîtront au cours de la description détaillée suivante d'une forme de réalisation faite en référence aux dessins annexés dans lesquels:

la figure 1 est une vue en coupe du dispositif d'amenée suivant l'invention;

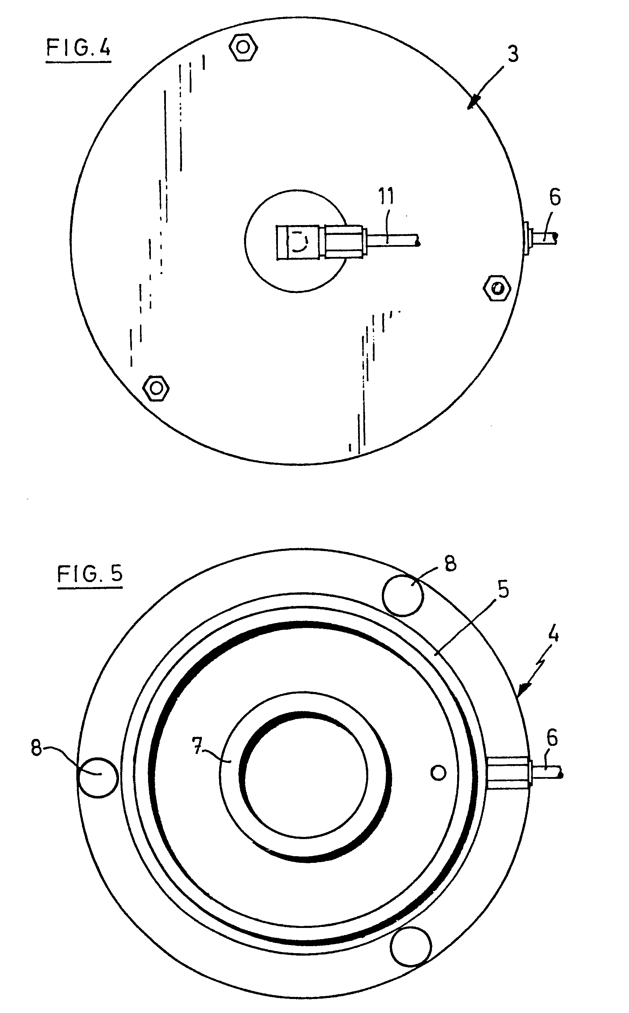

les figures 2 et 3 sont des vues analogues à la première, montrant comment la ventouse de préhension est appliqueé contre une vitre et soulève celle-ci;

la figure 4 est une vue en plan de la bride de fixation, et

la figure 5 est une vue de dessous de l'assiette mobile;

la figure 6 est une coupe verticale d'un dispositif double de chargement-déchargement.

Dans ces figures, les mêmes notations de référence désignent des éléments identiques ou analogues.

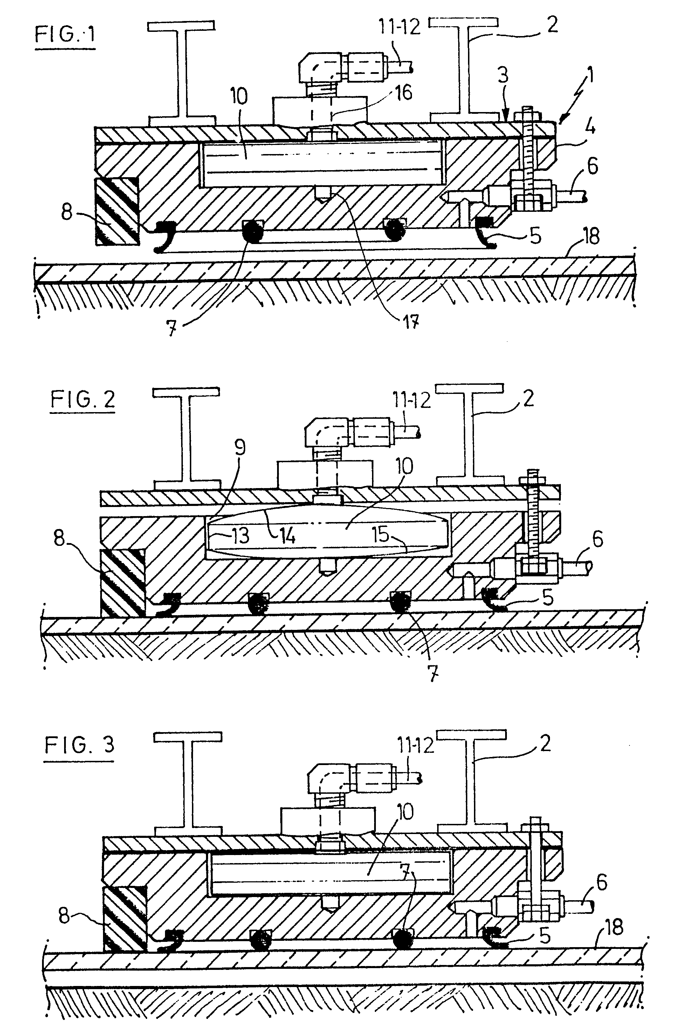

Comme illustré à la figure 1, les moyens d'amenée suivant l'invention sont constitués d'un boîtier désigné dans son ensemble par la notation de référence 1 et monté sur équipage mobile 2 destiné à plonger un ou plusieurs objets plats au coeur du poste de travail d'une machine non montrée.

Le boîtier 1 comprend une bride fixe 3, solidaire de l'équipage mobile 2 susdit et une assiette mobile 4 munie d'un joint annulaire d'étanchéité périphérique 5 et d'un orifice d'aspiration 6, débouchant sur des moyens d'aspiration non montrés.

Pour éviter la déformation d'une vitre à transporter, sous l'effet de l'aspiration, on prévoit au voisinage du centre de l'assiette une pastille élastique 7 ou O-ring ainsi qu'un ou plusieurs plots élastiques 8 entourant le joint annulaire d'étanchéité 5.

Le boîtier délimite une enceinte dans laquelle est disposé un vérin souple relié directement à une source d'alimentation d'air comprimé et à une source 12 de pression réduite et destiné à repousser ou à ramener une ventouse de préhension formée par les joints annulaires d'étanchéité 5.

Le vérin souple susdit est constitué d'une enveloppe en caoutchouc ou matière élastique comprenant un corps cylindrique 13 dont les faces d'extrémité 14, 15 sont des membranes qui, sous l'action d'une augmentation de pression, bombent réversiblement.

Les faces d'extrémités du vérin souple 10 sont fixées, la première à la bride fixe 3 et la seconde à l'assiette mobile 4 par des broches d'accouplement 16, 17 creuses filetées, engagées dans un raccord fileté de chacun des conduits de la source de gaz comprimé et de la source de pression réduite.

Une vitre 18 est amenée au poste de travail par un convoyeur amont et est évacuée par un convoyeur aval non montré. Un mécanisme comprenant un chariot roulant entraîné par une vis à billes et un moteur à courant continu sur un rail de guidage horizontal amène et éloigne l'équipage mobile 2 au-dessus du convoyeur amont 19 et dans le poste de travail de la machine.

L'équipage mobile est amené au-dessous de la vitre 18 posé sur la convoyeur amont, dont la marche est interrompue quelques instants. La distance entre le joint annulaire 5 et le vitrage est d'environ 1 à 2 cm.

Les phases successives d'un cycle de fonctionnement de la machine comprennent les opérations élémentaires suivantes:

— enclenchement par la vitre 18 arrivée en bout de course du convoyeur d'un détecteur de position non montré, qui commande l'arrêt d'un convoyeur amont et l'extension du dispositif d'amenée;

— production d'un souffle d'air comprimé au travers de l'orifice 6 de l'assiette mobile 4 permettant d'éloigner des impuretés éventuelles de la surface à agripper, tandis que de l'air comprimé est introduit dans le vérin souple 10. L'augmentation de pression bombe les membranes d'extrémité et induisent la descente de l'assiette mobile 4. La ventouse, constituée du joint 5 annulaire en V vient en appui sur la vitre;

— le vide est appliqué sur la ventouse et ensuite sur le vérin souple par le conduit 6. Le vérin souple 10 se rétracte et entraîne vers le haut la vitre 18. Par le retrait du vérin souple 10, l'assiette mobile 4 s'applique fermement contre la bride fixe 3 du boîtier 1 et forme un ensemble rigide ne comportant aucune pièce mobile, ni aucun jeu susceptible d'être à l'origine d'erreurs.

L'équipage mobile 2 se remet en marche et introduit la vitre 18 au poste de travail de la machine.

Le faible encombrement du boîtier 1 et de la ventouse 5 permet d'introduire le volume de verre endessous des cylindres de clamage de la machine, dans l'alignement de ceux-ci, sans qu'il y ait de porteà-faux.

Le dispositif d'amenée suivant l'invention permet de transporter rigidement et sans jeu, un objet plat dans la machine automatique.

Elle assure un chargement précis, car le vérin souple 10 en descendant, permet de déposer avec douceur et précision, la vitre 18 sur le plateau tournant 21 ou table de travail de la machine susdite.

Un dispositif de commande isole la ventouse 5 de la source de pression réduite 12 et enclenche l'arrivée d'un soufle d'air comprimé qui sépare la vitre 18 de la ventouse 5.

Dès que la vitre 18 est libérée, le vérin souple 10 actionne l'assiette susdite 4 munie de sa ventouse de préhension 5 vers le haut et un nouveau cycle de manutention peut être effectué.

Ainsi, pour permettre les chargement et déchargement simultanés d'une machine de coupe automatique, il suffit de munir un élément de clamage supérieur 22 de la machine, d'une ventouse de préhension 23 partiellement escamotée et à enlever et soulever la vitre 18' qui vient d'être usinée.

Dès que l'élément de clamage 22 est en position supérieure, un équipage mobile 2 muni d'un dispositif double de chargement-déchargement comprenant deux vérins souples 10, 10' fixés de part et d'autre, à une bride 3 par une première face d'extrémité 14 et à une assiette mobile 4 par une seconde face d'extrémité 15, au moyen de broches d'accouplement creuses 16, 17, reliés à chacun des conduits de la source d'air comprimé 11 et de la source de pression réduite 12.

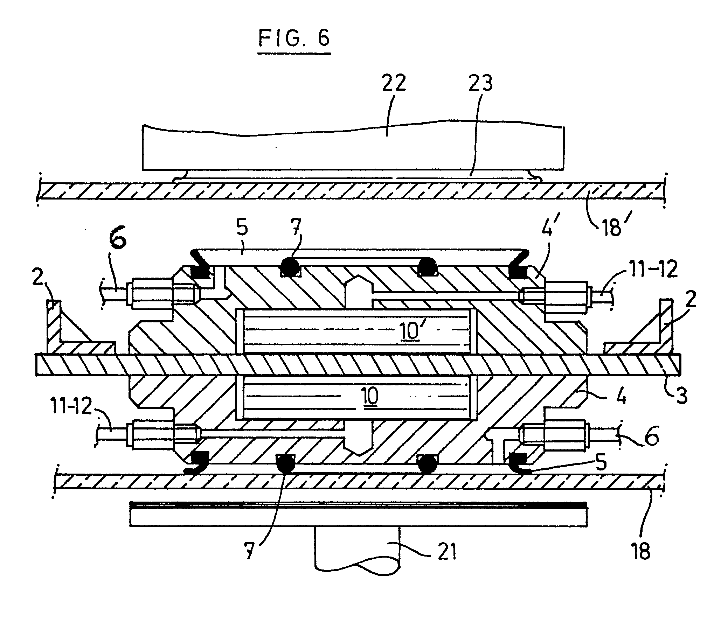

Le vérin souple 10' supérieur permet d'appuyer une ventouse de préhension 5' contre la vitre usinée 18 enlevée par l'élément de clamage 22 de la machine, tandis que le vérin souple inférieur 5 permet de déposer avec précision au poste de travail, une vitre à usiner 18 (figure 6).

Une telle opération simultanée de chargement-déchargement au coeur du poste de travail d'une machine de coupe automatique, ne peut être réalisée que par un dispositif peu encombrant.

La compacité des dispositifs suivant l'invention permet leur évolution simultanée dans une machine de coupe automatique, même lorsqu'ils sont superposés, afin d'amener et enlever simultanément des vitrages disposés l'un au-dessus de l'autre, de manière à diminuer les distances à parcourir.

La précision du dispositif d'amenée suivant l'invention résulte du fait que le caoutchouc, qui constitue le vérin souple, possède une hystérèse nulle, et n'entraîne aucune déformation rémanente.

En outre, lors du retrait du vérin souple, l'assiette mobile 4 s'applique fermement contre la bride fixe du boîtier en formant un ensemble totalement rigide.

Il est évident que l'invention n'est en aucune façon limitée à la forme de réalisation décrite ci-dessus et que de nombreuses modifications peuvent être apportées à celle-ci sans pour autant sortir du cadre de l'invention, telle qu'elle est définie dans les revendications.

**Revendications**

1. Dispositif d'amenée, de positionnement, de maintien, de transfert et/ou d'enlèvement automatique d'objets plats, constitué d'un boîtier (1) mû par un équipage mobile de manutention et comprenant une bride fixe (3) et une assiette mobile (4) pourvue d'une ventouse de préhension, et délimitant une enceinte (9) dans laquelle est disposé un vérin souple (10) relié directement à une source (11) d'alimentation de gaz et à une source (12) de pression réduite, destiné à repousser ou à ramener une ventouse de préhension formée par un joint annulaire d'étanchéité (5), caractérisé en ce que le vérin souple (10) susdit est constitué d'une enveloppe en caoutchouc ou en matière élastique ayant deux faces d'extrémité (14, 15) constituées par des membranes qui, en se rétractant sous l'action d'une pression réduite appliquent fermement l'assiette mobile (4) contre la bride fixe (3) du boîtier (1), en formant un ensemble totalement rigide.

2. Dispositif suivant la revendication 1, caractérisé en ce que les faces d'extrémité du vérin souple (10) sont fixées, la première à la bride fixe (3) et la seconde à l'assiette mobile (4), par des broches d'accouplement creuses filetées (16, 17) engagées dans un raccord fileté de chacun des conduits de la source de gaz comprimé et de la source de pression réduite.

3. Dispositif suivant la revendication 1, caractérisé en ce que le dispositif de chargement-déchargement comprend un deuxième vérin souple (10') fixé au côté opposé de la bride fixe (3) par sa première face d'extrémité et à une deuxième assiette mobile (4') par sa seconde face d'extrémité, les deux vérins étant fixés au moyen de broches d'accouplement creuses reliées à chacun des conduits de la source d'air comprimé (11) et de la source de pression réduite (12).

**Patentansprüche**

1. Vorrichtung zum automatischen Mitnehmen, Positionieren, Festhalten, Weiterführen und/oder Abheben flacher Gegenstände, die aus einem von einer beweglichen Halteeinrichtung bewegten Gehäuse (1) besteht, das einen festen Flansch (3) und einem mit einem Greifnapf versehenen beweglichen Teller (4) aufweist und das eine Kammer (9) abgrenzt, in der eine direkt mit einer Gasversorgungsquelle (11) und einer Quelle (12) reduzierten Drucks verbundene biegsame Hebeeinrichtung (10) vorgesehen ist, die einen aus einem Dichtungsring (5) bestehenden Greifnapf abstösst oder anzieht, dadurch gekennzeichnet, dass die biegsame Hebeeinrichtung (10) aus einer Hülle aus Kautschuk oder aus elastischem Material besteht, die zwei aus Membranen bestehende Aussenflächen (14, 15) aufweist, welche Membranen, indem sie sich unter der Wirkung reduzierten Drucks zusammenziehen, den beweglichen Teller (4) fest gegen den festen Flansch (3) des Gehäuses drücken und so eine gänzlich steife Einheit bilden.

2. Vorrichtung nach Anspruch 1, dadurch gekennzeichnet, dass die Aussenflächen der biegsamen Hebeeinrichtung (10) durch hohle mit Schraubengewinde versehene Spindeln (16, 17), die an einem mit Schraubengewinde versehenen Verbindungsstück jeder der Leitungen der Quelle komprimierten Gases und der Quelle reduzierten Drucks angeordnet sind, befestigt sind, und zwar die erste mit dem festen Flansch (3) und die zweite mit dem beweglichen Teller (4).

3. Vorrichtung nach Anspruch 1, dadurch gekennzeichnet, dass die Lade-Entlade-Vorrichtung eine zweite biegsame Hebeeinrichtung (10') aufweist, die mit ihrer ersten Aussenfläche an der gegenüberliegenden Seite des festen Flansches (3) und mit ihrer zweiten Aussenfläche an einem zweiten beweglichen Teller (4') befestigt ist, wobei die beiden Hebeeinrichtungen mittels hohler Befestigungsspindeln befestigt sind, die mit jeder der Leitungen der Quelle (11) komprimierter Luft und der Quelle (12) reduzierten Drucks verbunden sind.

**Claims**

1. A device for the automatic supply, positioning, support, transfer and/or removal of flat objects, consisting of a housing (1) moved by a mobile handling system and comprising a fixed flange (3) and a mobile plate (4) provided with a gripping sucker and defining a chamber (9) in which there is arranged a flexible jack (10) which is connected directly to a gas supply source (11) and to a reduced pressure source (12) and is intended to repel or draw back a gripping sucker formed of an annular gasket (5), characterized in that the above-mentioned flexible jack (10) consists of a case of rubber or of elastic material with two end faces (14, 15) consisting of diaphragms which, retracting under the effect of reduced pressure, firmly apply the mobile plate (4) against the fixed flange (3) of the housing (1), forming a totally rigid assembly.

2. A device according to claim 1, characterized in that the end faces of the flexible jack (10) are fixed, the first end face to the fixed flange (3) and the second end face to the mobile plate (4), by hollow, threaded coupling pins (16, 17) engaged in a threaded connecting element of each of the pipes from the compressed gas and reduced pressure sources.

3. A device according to claim 1, characterized in that the loading/unloading device comprises a second flexible jack (10') fixed to the opposite side of the fixed flange (3) by its first end face and to a second mobile plate (4') by its second end face, the two jacks being fixed by means of hollow coupling pins connected to each of the pipes from the compressed air source (11) and the reduced pressure source (12).

FIG. 1

FIG. 2

FIG. 3

FIG. 4

3

11

6

FIG. 5

8

5

4

8

7

6

## FIG. 6